# EUROPÄISCHE PATENTANMELDUNG

(11) **EP 2 980 263 A1**
(43) Veröffentlichungstag der Anmeldung: **03.02.2016**
(21) Anmeldenummer: 14179043.6
(22) Anmeldetag: 30.07.2014
(51) Int. Cl.: C23C 10/30, B29C 67/00, C23C 10/60, C22C 27/04, C23C 28/04, C23C 28/00, F01D 5/28

(54) **Bauteil aus einer Molybdän-Legierung und Verfahren zu seiner Herstellung**

(71) Anmelder: MTU Aero Engines AG, 80995 München (DE)
(72) Erfinder: Fried, Markus, 83626 Valley (DE); Dr. Smarsly, Wilfried, 81669 München (DE)

(57) **Zusammenfassung**

Die vorliegende Erfindung betrifft ein Bauteil, insbesondere ein Bauteil für eine Strömungsmaschine, aus einer Molybdän - Legierung (1), wobei das Bauteil mindestens eine Fläche (5) aufweist, die einen Innenbereich des Bauteils überdeckt und die Grenze der Molybdän - Legierung bildet, wobei an der mindestens einen Fläche der Anteil an Aluminium und/oder Silizium in der Molybdän - Legierung höher ist als im Innenbereich des Bauteils sowie ein Verfahren zur Herstellung eines derartigen Bauteils.

## Beschreibung

### GEBIET DER ERFINDUNG

Die vorliegende Erfindung betrifft ein Bauteil, insbesondere ein Bauteil für eine Strömungsmaschine, wie eine stationäre Gasturbine oder ein Flugzeugtriebwerk, aus einer Molybdän - Legierung sowie ein Verfahren zu seiner Herstellung.

### STAND DER TECHNIK

In Strömungsmaschinen, wie stationären Gasturbinen oder Flugzeugtriebwerken, herrschen Umgebungsbedingungen mit hohen Temperaturen und aggressiven Medien und die Komponenten der Strömungsmaschine sind teilweise hohen mechanischen Belastungen ausgesetzt, die sehr hohe Anforderungen an die einzusetzenden Werkstoffe stellen. Derzeit in Strömungsmaschinen eingesetzte Werkstoffe werden abhängig von den Umgebungsbedingungen, die in der Strömungsmaschine sehr unterschiedlich sein können, bei Bedarf mit unterschiedlichen Schutzsystemen geschützt, um sie beispielsweise vor Korrosionsangriffen, Oxidationsangriffen, Verschleiß oder zu hohen thermischen Belastungen zu schützen.

So ist es beispielsweise bekannt, Nickelbasis - Superlegierungen, die beispielsweise als Schaufelwerkstoffe eingesetzt werden, mit Haftvermittler- und Oxidationsschutzschichten sowie Wärmedämmschichten zu versehen, um den Grundwerkstoff vor zu großer Temperaturbelastung und Oxidationsangriffen zu schützen.

In der US 2010/0189911 A1 sind beispielsweise eine Haftvermittlerschicht und Wärmedämmschicht auf Basis von Molybdändisilizid sowie Siliziumnitrid, Siliziumkarbid und Tantaloxid für verschiedene Grundwerkstoffe beschrieben. Darüber hinaus gibt es jedoch zahlreiche weitere Beispiele für Bauteile mit geeigneten Schutzschichtsystemen und Grundwerkstoffen, die für Komponenten von Strömungsmaschinen eingesetzt werden können.

Allerdings gibt es auf Grund der ständig steigenden Anforderungen an eine höhere Effizienz der Strömungsmaschinen weiteren Bedarf, Bauteile für Strömungsmaschinen aus geeigneten Werkstoffen herzustellen, die durch ein niedrigeres Gewicht bzw. eine geringere Dichte, eine höhere Temperaturbeständigkeit, eine bessere Kriechbeständigkeit oder geringere Herstellkosten dazu beitragen können, die Effizienz von Strömungsmaschinen zu verbessern.

### OFFENBARUNG DER ERFINDUNG

### AUFGABE DER ERFINDUNG

Es ist deshalb eine Aufgabe der vorliegenden Erfindung ein Bauteil für insbesondere eine Strömungsmaschine bereitzustellen, welches bei hohen Temperaturen eingesetzt werden kann und zudem ein geringes Gewicht aufweist, so dass es insbesondere zur Effizienzsteigerung bei Strömungsmaschinen beiträgt. Zudem soll das Bauteil zuverlässig betrieben werden können, eine möglichst lange Lebensdauer aufweisen und möglichst einfach herstellbar sein.

### TECHNISCHE LÖSUNG

Diese Aufgabe wird gelöst durch ein Bauteil mit den Merkmalen des Anspruchs 1 sowie durch ein Verfahren zur Herstellung eines derartigen Bauteils mit den Merkmalen des Anspruchs 8. Vorteilhafte Ausgestaltungen sind Gegenstand der abhängigen Ansprüche.

Gemäß der vorliegenden Erfindung wird vorgeschlagen, ein Bauteil für eine Strömungsmaschine aus einer Molybdän - Legierung, insbesondere einer Molybdän - Superlegierung zu fertigen, da derartige Legierungen bezüglich ihrer Festigkeitseigenschaften Potential besitzen im Temperaturbereich von 800°C bis 1300°C eingesetzt zu werden. In diesem Temperaturbereich weisen Molybdän - Legierungen weiterhin gute mechanische Eigenschaften hinsichtlich der Festigkeit und vor allem auch eine gute Kriechbeständigkeit auf. Außerdem können Molybdän - Legierungen, insbesondere, wenn sie durch intermetallische Silizide verstärkt sind, eine geringe Dichte aufweisen, was insbesondere bei bewegten Bauteilen und für Flugtriebwerke vorteilhaft ist. Zudem sind die Herstellkosten für Molybdän - Legierungen zumeist relativ niedrig im Vergleich mit den derzeit eingesetzten Werkstoffen für den angestrebten Temperaturbereich. Allerdings muss für den Temperaturbereich von 700°C bis 1300°C die Oxidationsbeständigkeit verbessert werden. Hierzu schlägt die Erfindung vor, zumindest den oberflächennahen Bereich der Legierung mit Aluminium und/oder Silizium anzureichern, sodass durch höhere Aluminium - und/oder Silizium - Gehalte bei thermischer Belastung des Bauteils bei Anwesenheit von Sauerstoff langsam wachsende Aluminiumoxid - oder Siliziumoxidschichten ausgebildet werden.

Die erfindungsgemäß für das Bauteil vorgesehenen Molybdän - Legierungen weisen als Hauptbestandteil, also als Bestandteil mit dem größten Anteil in der chemischen Zusammensetzung, Molybdän auf. Molybdän - Superlegierungen bezeichnen hierbei Legierungen, die aufgrund von Ausscheidungen, insbesondere intermetallischen Verbindungen eine besonders hohe Festigkeit, insbesondere Hochtemperaturfestigkeit aufweisen.

Die Anreicherung von Aluminium und/oder Silizium in der Molybdän - Legierung kann dadurch erreicht werden, dass entweder eine Beschichtung aus einem oder mehreren aluminium - und/oder siliziumhaltigen Materialien auf dem Bauteil aufgebracht wird und anschließend durch eine Wärmebehandlung eine Diffusion von Aluminium und/oder Silizium in die Molybdän - Legierung erfolgt.

Alternativ hierzu kann ein entsprechendes Bauteil auch pulvermetallurgisch hergestellt werden, indem das Bauteil schichtweise aus Pulver aufgebaut wird, welches durch Schmelzen oder Sintern stoffschlüssig mit dem bereits vorhandenen Bauteil verbunden wird. Bei einer derartigen generativen Herstellung aus Pulvermaterial kann der Anteil an Aluminium und/oder Silizium innerhalb des eingesetzten Pulvermaterials erhöht werden, sodass wiederum der Anteil an Aluminium und/oder Silizium im Bauteil in Richtung der Oberfläche zunehmend eingestellt werden kann.

Durch eine Anreicherung von Aluminium und/oder Silizium in zumindest oberflächennahen Bereichen der Molybdän - Legierung kann erreicht werden, dass ausreichend Aluminium und/oder Silizium für die Bildung von Aluminiumoxid oder Siliziumoxid bei einem Oxidationsangriff zur Verfügung steht, sodass schützende Aluminiumoxid - oder Siliziumoxid - Deckschichten ausgebildet werden können.

Bei der Herstellung des Bauteils bzw. der Anreicherung von Aluminium und/oder Silizium in oberflächennahen Bereichen des Bauteils durch Aufbringen einer Beschichtung und anschließendes Diffundieren von Aluminium und/oder Silizium aus der Beschichtung in die Molybdän - Legierung kann ein Teil der Beschichtung auf dem Bauteil verbleiben, wenn die aufgebrachte Beschichtung nicht zu 100% in der Molybdän - Legierung diffundiert bzw. nach dem Diffusionsprozess nicht entfernt wird. Da zur Aufbringung von Aluminium und/Silizium Beschichtungsmaterial verwendet werden kann, welches Molybdän und/oder Titan und/oder Eisen und/oder Chrom und somit entsprechende Verbindungen bzw. Legierungen dieser Elemente mit Aluminium und/oder Silizium umfassen kann, kann auf dem Bauteil eine Beschichtung vorhanden sein, die Aluminium und/oder Silizium umfasst.

Darüber hinaus kann das Bauteil eine Oberflächendeckschicht in Form einer Verschleißschutzschicht aufweisen, die beispielsweise Zirkonoxid, Yttriumoxid, Wolframkarbid und/oder Titannitrid umfassen kann. Dadurch kann die Verschleißbeständigkeit des Bauteils gewährleistet werden.

Die Verschleißschutzschicht kann als Gradientenschicht auf dem Bauteil ausgebildet sein bzw. werden, sodass sie in einem innenliegenden, dem Bauteil zugewandten Bereich Anteile der Molybdän - Legierung und/oder einer zwischen Molybdän - Legierung und Verschleißschutzschicht angeordneten Beschichtung aufweisen kann. Die gradierte Verschleißschutzbeschichtung weist dann in Richtung der Oberfläche einen zunehmenden Anteil der eigentlichen Verschleißschutzbeschichtung aus Karbiden, Nitriden oder Oxiden auf, bis an der Oberfläche eine reine Verschleißschutzbeschichtung beispielsweise aus den oben genannten Bestandteilen vorliegt und keine Anteile der Molybdän - Legierung oder einer dazwischen angeordneten Beschichtung mehr enthalten sind.

Der mit Aluminium und/oder Silizium angereicherte Bereich der Molybdän - Legierung und/oder eine Verschleißschutzbeschichtung können weiterhin Strontium aufweisen, um den Schutz gegen Wasserdampfkorrosion zu verbessern.

### KURZBESCHREIBUNG DER FIGUREN

Die beigefügten Zeichnungen zeigen in rein schematischer Weise in
- Fig. 1: einen Querschnitt durch einen oberflächennahen Bereich eines erfindungsgemäßen Bauteils gemäß einer ersten Ausführungsform;
- Fig. 2: einen teilweisen Querschnitt durch einen oberflächennahen Bereich eines erfindungsgemäßen Bauteils nach einer zweiten Ausführungsform;
- Fig. 3: einen teilweisen Querschnitt durch einen oberflächennahen Bereich eines erfindungsgemäßen Bauteils nach einer dritten Ausführungsform; und in
- Fig. 4: eine Darstellung der generativen Herstellung eines Bauteils durch schichtweisen Aufbau.

### AUSFÜHRUNGSBEISPIELE

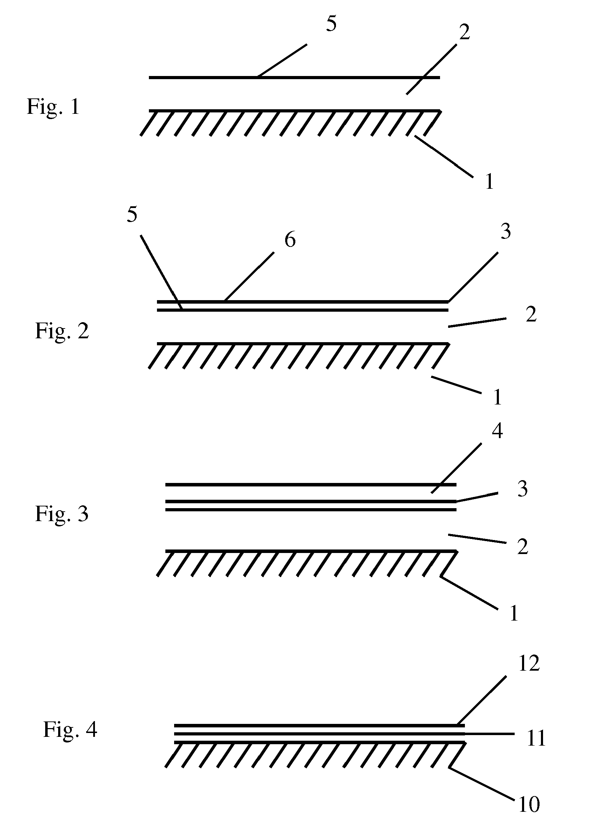

Die Fig. 1 zeigt in einem ersten Ausführungsbeispiel einen teilweisen Querschnitt durch einen oberflächennahen Bereich eines erfindungsgemäßen Bauteils mit einem Basiswerkstoff aus einer Molybdän - Legierung 1, bei dem im oberflächennahen Bereich eine Gradientenschicht 2 ausgebildet ist, die in Richtung der Oberfläche 5 einen zunehmenden Anteil an Aluminium und/oder Silizium aufweist. Ein derartiger Aufbau kann beispielsweise durch ein generatives Herstellungsverfahren, wie beispielsweise selektives Laserschmelzen, selektives Lasersintern, selektives Elektronenstrahlschmelzen oder selektives Elektronenstrahlsintern aber auch durch schichtweisen Aufbau durch thermisches Spritzen oder durch CVP- oder PVD-Verfahren oder durch Pulverpack-Verfahren erzeugt werden. Entsprechend wird bei diesem Verfahren dass eingesetzte Pulver mit Aluminium und/oder Silizium angereichert, je näher das Pulver in der Nähe der Oberfläche in das Bauteil eingebaut wird, sodass sich die Gradientenschicht 2 mit zunehmenden Aluminium - und/oder Siliziumanteil in Richtung der Oberfläche 5 ausbildet.

Alternativ kann das Bauteil mit aluminium - und/oder siliziumhaltigen Materialien, wie zum Beispiel Al₂O₃, SiO₂ und SiN, beschichtet werden, beispielsweise durch Sprühen oder Tauchen, und einer anschließenden Wärmebehandlung ausgesetzt werden, sodass Aluminium und/oder Silizium in die Molybdän - Legierung eindiffundieren können. Entsprechend liegt bei einem derartigen Bauteil, wie es beispielsweise in Fig. 2 dargestellt ist, in einem inneren Bereich wiederum die Molybdän - Legierung 1 vor, die in ihrem äußeren Bereich gradiert ausgebildet ist, so dass sich eine Gradientenschicht 2 ergibt, in welcher wiederum der Gehalt an Aluminium und/oder Silizium vom Bauteilinneren nach außen zunimmt. An der Oberfläche ist der Rest der Beschichtung 3 vorhanden, welche das Aluminium und/oder Silizium für die Diffusion in die Gradientenschicht 2 bereitgestellt hat. Eine entsprechende Schicht 3 kann beispielsweise aus Verbindungen bzw. Legierungen von Molybdän und/oder Titan und/oder Eisen und/oder Chrom mit Aluminium und/oder Silizium bestehen. Die Beschichtung 3 kann entweder auf dem Bauteil verbleiben oder nach erfolgter Diffusionsbehandlung entfernt werden. Die Grenzfläche 5 zwischen der Beschichtung 3 und der Gradentenschicht 2 stellt die ehemalige Bauteiloberfläche dar, die nach der Beschichtung durch die Fläche 6 gegeben ist.

Die Fig. 3 zeigt eine Ausführungsform ähnlich der Ausführungsform der Fig. 2, bei welcher jedoch zusätzlich eine Oberflächendeckschicht 4 in Form einer Verschleißschutzschicht aufgebracht ist. Die Verschleißschutzschicht kann beispielsweise aus Zirkonoxid, Yttriumoxid, Wolframkarbid, Titannitrid oder Kombinationen daraus gebildet sein. Die Verschleißschutzschicht 4, wie sie in der Fig. 3 dargestellt ist, könnte auch auf dem Bauteil gemäß der Fig. 1 aufgebracht sein, sodass sich unmittelbar an die Gradientenschicht 2 die Verschleißschutzschicht 4 anschließen würde.

Die Fig. 4 verdeutlicht in einer rein schematischen Darstellung die generative Herstellung eines Bauteils durch schichtweises Abscheiden von Pulvermaterial. Mit 10 ist ein bereits teilweise hergestelltes Bauteil bezeichnet, auf dem bereits eine Schicht 11 abgeschieden ist. Oberhalb der Schicht 11 ist eine Pulverschicht 12 aufgebracht, die im nächsten Schritt auf dem Bauteil 10 abgeschieden wird. Durch selektives Abscheiden der Pulverschicht 12, beispielsweise durch selektives Aufschmelzen durch einen Laser- oder Elektronenstrahl, kann das Bauteil 10 in der gewünschten Form hergestellt werden. Durch Anreicherung der Pulverschicht 12 mit Aluminium und/oder Silizium gegenüber der vorher aufgebrachten Schicht 11 kann auch eine Ausbildung einer Gradientenschicht im Bauteil 10 ermöglicht werden.

Obwohl die vorliegende Erfindung anhand der Ausführungsbeispiele detailliert beschrieben worden ist, ist dem Fachmann selbstverständlich, dass die Erfindung nicht auf diese Ausführungsbeispiele beschränkt ist, sondern dass Abwandlungen in der Weise, dass einzelne Merkmale weggelassen oder andersartige Kombinationen von Merkmalen verwirklicht werden können, erfolgen können, solange der Schutzbereich der beigefügten Ansprüche nicht verlassen wird. Die vorliegende Offenbarung schließt sämtliche Kombinationen der vorgestellten Einzelmerkmale mit ein.

## Patentansprüche

1. Bauteil, insbesondere Bauteil für eine Strömungsmaschine, aus einer Molybdän - Legierung, wobei das Bauteil mindestens eine Fläche (5) aufweist, die einen Innenbereich des Bauteils überdeckt und die Grenze der Molybdän - Legierung bildet,
**dadurch gekennzeichnet, dass**
an der mindestens einen Fläche der Anteil an Aluminium und/oder Silizium in der Molybdän - Legierung (1) höher ist als im Innenbereich des Bauteils.

2. Bauteil nach Anspruch 1,
**dadurch gekennzeichnet, dass**
das Aluminium und/oder Silizium mit vom Innenbereich zur Oberfläche zunehmendem Anteil in der Molybdän - Legierung (1) vorliegen.

3. Bauteil nach Anspruch 1 oder 2,
**dadurch gekennzeichnet, dass**
das Aluminium und/oder Silizium als Verbindungen mit Molybdän und/oder Titan und/oder Eisen und/oder Chrom vorliegen.

4. Bauteil nach einem der vorhergehenden Ansprüche,
**dadurch gekennzeichnet, dass**
das Bauteil eine Beschichtung (3) aufweist, in der Aluminium und/oder Silizium enthalten sind.

5. Bauteil nach einem der vorhergehenden Ansprüche,
**dadurch gekennzeichnet, dass**
das Bauteil eine Verschleißschutzbeschichtung (4) aufweist, die insbesondere mindestens eine der Bestandteile der Gruppe aufweist, die Zirkonoxid, Yttriumoxid, Wolframkarbid und Titannitrid umfasst.

6. Bauteil nach Anspruch 5,
**dadurch gekennzeichnet, dass**
die Verschleißschutzschicht (4) als Gradientenschicht auf dem Bauteil ausgebildet ist.

7. Bauteil nach einem der vorhergehenden Ansprüche,
**dadurch gekennzeichnet, dass**
das Bauteil zumindest in einem oberflächennahen Bereich Sr aufweist.

8. Verfahren zur Herstellung eines Bauteils nach einem der vorhergehenden Ansprüche, bei welchem ein Bauteil aus einer Molybdän - Legierung bereitgestellt wird,
**dadurch gekennzeichnet, dass**
eine Beschichtung (3) aus einem A1 und/oder Si haltigen Material aufgebracht wird, wobei das Bauteil mit der Beschichtung einer Wärmebehandlung in Form einer Diffusionsglühung unterzogen wird, so dass A1 und/oder Si in die Molybdän - Legierung des Bauteils eindiffundieren.

9. Verfahren nach Anspruch 8 ,
**dadurch gekennzeichnet, dass**
das Beschichtungsmaterial Mo und/oder Ti umfasst.

10. Verfahren zur Herstellung eines Bauteils nach einem der Ansprüche 1 bis 7, bei welchem ein Bauteil aus einer Molybdän - Legierung generativ aus einem Pulvermaterial durch schichtweise Abscheidung hergestellt wird, wobei die Herstellung so erfolgt, dass in Richtung auf eine Oberfläche der Anteil an A1 und/oder Si erhöht wird.

11. Verfahren nach Anspruch 10,
**dadurch gekennzeichnet, dass**
die schichtweise Abscheidung durch selektives Laserstrahlschmelzen, selektives Laserstrahlsintern, selektives Elektronenstrahlschmelzen, selektives Elektronenstrahlsintern oder durch thermisches Spritzen oder durch PVD- oder CVD-Verfahren oder durch Pulverpack-Verfahren erfolgt.

12. Verfahren nach einem der Ansprüche 10 oder 11,
**dadurch gekennzeichnet, dass**
eine Oberflächendeckschicht in Form einer Verschleißschutzschicht (4) aufgebracht wird.

13. Verfahren nach Anspruch 12,
**dadurch gekennzeichnet, dass**
die Verschleißschutzschicht als Gradientenschicht aufgebracht wird.
